Europäisches Patentamt

European Patent Office

Office européen des brevets

(19)

(11) **EP 0 718 329 A1**

(12) # DEMANDE DE BREVET EUROPEEN

(43) Date de publication:
26.06.1996 Bulletin 1996/26

(51) Int. Cl.⁶: **C08F 279/02**, C08F 291/02, C08L 51/04, C08F 292/00

(21) Numéro de dépôt: 95118202.1

(22) Date de dépôt: 20.11.1995

(84) Etats contractants désignés:
**AT BE DE ES FR GB IT NL SE**

(30) Priorité: **21.12.1994 FR 9415403**

(71) Demandeur: **ELF ATOCHEM S.A.**
**F-92800 Puteaux (FR)**

(72) Inventeurs:
• **Sarraf, Tarek**
**F-64140 Lons (FR)**
• **Antoine, Hervé**
**F-88100 Saint Die (FR)**
• **Balard, Henri**
**F-68440 Bruebach (FR)**

(54) **Procédé de fabrication d'une composition comprenant un polymère vinylaromatique, un caoutchouc, une charge minérale et un agent de couplage, et la composition ainsi obtenue**

(57) L'invention concerne un procédé de fabrication d'une composition comprenant un polymère vinylaromatique, un caoutchouc et une charge minérale, ledit procédé comprenant une étape de polymérisation d'au moins un monomère vinylaromatique en présence de ladite charge minérale, caractérisé en ce que l'étape de polymérisation est réalisée en présence d'un agent de couplage capable de greffer en surface de la charge minérale un groupement organique.

**Description**

La présente invention concerne un procédé de fabrication d'une composition comprenant un polymère vinylaromatique, un caoutchouc et une charge minérale. Elle concerne également le produit susceptible d'être obtenu par ledit procédé.

L'incorporation de charges minérales dans un matériau thermoplastique peut présenter divers intérêts. Cette charge, dans certains cas, peut conférer au matériau thermoplastique des propriétés mécaniques particulières. Dans d'autres cas, l'incorporation de charges minérales à bas prix présente surtout l'intérêt de diminuer le coût du matériau, étant entendu que le matériau chargé doit conserver des propriétés physico-chimique acceptables compte tenu de l'application envisagée.

L'incorporation de charges minérales dans un matériau thermoplastique est habituellement réalisée par mélange du thermoplastique avec la charge minérale. Il s'agit donc d'une opération postérieure à la fabrication du thermoplastique par polymérisation.

Pour la synthèse d'un polystyrène choc contenant une charge minérale, la demande de brevet GB 1528094 enseigne que la charge minérale peut être introduite avec le styrène destiné à être polymérisé.

La présente invention concerne un procédé de fabrication d'une composition comprenant un polymère vinylaromatique, un caoutchouc et une charge minérale et comprenant une étape de polymérisation d'au moins un monomère vinylaromatique en présence de ladite charge minérale et en présence d'un agent de couplage.

Le procédé selon l'invention mène à un matériau de la famille des "polymères vinylaromatiques chocs" lesquels se présentent sous la forme d'une matrice de polymère vinylaromatique contenant des particules (parfois appelés nodules) de caoutchouc, lesdites particules pouvant elles-mêmes contenir du polymère vinylaromatique.

Ces matériaux présentent généralement un rapport de la masse de polymère issu de la polymérisation ou copolymérisation du monomère vinylaromatique sur la masse de caoutchouc allant de 2 à 40.

Dans le procédé selon l'invention, l'agent de couplage est introduit dans le milieu de polymérisation indépendamment de la charge minérale. Le procédé selon l'invention se distingue donc d'un procédé dans lequel la charge minérale aurait été préalablement traitée par un agent de couplage, puis introduite dans le milieu de polymérisation.

Le matériau susceptible d'être obtenu par le procédé selon l'invention, présente une meilleure résistance aux chocs, et généralement un plus fort allongement à la rupture :

♦ qu'un matériau équivalent réalisé de la même façon mais sans agent de couplage, et
♦ qu'un matériau équivalent réalisé par mélange du polymère et de la charge minérale, et
♦ qu'un matériau équivalent réalisé par mélange du polymère et de la charge minérale, cette dernière étant traitée avant mélange par l'agent de couplage.

L'agent de couplage est capable de greffer en surface de la charge minérale au moins un groupement organique. De préférence, l'agent de couplage satisfait aux trois conditions de compatibilité suivantes :

1°/ il est soluble à 20°C dans le monomère vinylaromatique que l'on se propose de polymériser à raison d'au moins 100 g/litre, et
2°/ le mélange réalisé en phase fondue, à parts égales en poids d'agent de couplage et du caoutchouc que l'on se propose d'utiliser, forme une phase homogène à toute température comprise entre 20 et 250°C.
3°/ il satisfait au test suivant vis-à-vis de la charge minérale que l'on se propose d'utiliser :

a) on traite la charge minérale en mélangeant à 20°C, 1 litre d'éthylbenzène, 1 g d'agent de couplage, 100 g de charge minérale. On agite cette suspension pendant 20 minutes à 20°C, on la filtre, puis on sèche à 80°C, pendant 30 minutes sous un vide de 5 mbars le solide ainsi obtenu.
b) on saupoudre la surface de mélanges eau-isopropanol par le solide préparé au a) ci-dessus, à 20°C.
c) si la poudre traitée au a) reste au moins 1 minute en surface de l'eau, l'agent de couplage satisfait au test compte tenu de la charge minérale que l'on se propose d'utiliser. L'agent de couplage est d'autant mieux adapté que la poudre traitée au a) reste plus longtemps en surface des mélanges eau-isopropanol et que ces mélanges contiennent plus d'isopropanol.

Généralement, l'agent de couplage contient un site permettant de greffer par liaison covalente ou par liaison polaire un groupement organique à la charge minérale.

Ainsi, si la liaison est polaire, il pourra ne pas y avoir de réaction chimique entre l'agent de couplage et la charge minérale de sorte que c'est l'agent de couplage tel qu'introduit qui est fixé sur la charge minérale et qui apporte le groupement organique. Si la liaison est covalente, c'est que le site aura réagit chimiquement avec la surface de la charge minérale, par exemple par réaction avec ses groupements hydroxyles de surface, de sorte que l'espèce fixée en surface de la charge minérale sera différente de celle introduite en tant qu'agent de couplage. A titre d'exemple, le site peut généralement être un groupement de type acide carboxylique ou anhydride d'acide carboxylique. L'agent de couplage peut être choisi parmi les acides monocarboxyliques aliphatiques saturés, les acides dicarboxyliques aliphatiques saturés, les acides aliphatiques présentant une double liaison carbonée, les anhydrides des acides qui viennent d'être mentionnés.

De préférence, le groupement organique comprend un enchaînement linéaire d'au moins quatre atomes de carbone, ledit enchainement comprenant au plus une insaturation. Le groupement organique peut comprendre au moins une chaîne de polybutadiène. De préférence, l'agent de couplage ne contient ni noyau aromatique ni atome d'halogène.

L'agent de couplage peut généralement être l'acide laurique, l'acide myristique, l'acide palmitique, l'acide stéarique, l'anhydride hexanoïque. L'agent de couplage peut également généralement être un polybutadiène présentant une fonction acide ou anhydride d'acide carboxylique.

La charge minérale est constituée d'un ensemble de particules pouvant être choisi parmi $SiO_2$, $CaCO_3$, $Ti_2O_3$, $Al(OH)_3$, $Sb_2O_3$ et le talc. Ces particules sont en général individualisées et présentent un diamètre moyen pouvant généralement aller de 0,2 à 20 $\mu$m.

Si l'on fait abstraction de la présence de la charge minérale et de l'agent de couplage, l'étape de polymérisation peut être réalisée conformément aux techniques connues de l'homme du métier pour polymériser ou copolymériser un monomère vinylaromatique en présence d'un caoutchouc. Sont ainsi concernées les techniques de polymérisation anioniques, radicalaire ou de type Ziegler-Natta. Le procédé selon l'invention peut fonctionner en continu ou en discontinu.

La réaction de polymérisation peut être amorcée thermiquement, sans initiateur ni catalyseur, ou par un initiateur de radicaux libres. Si la polymérisation est amorcée thermiquement, elle peut être réalisée entre 100 et 200°C et de préférence entre 110 et 160°C.

Si la polymérisation est amorcée par un initiateur de radicaux libres, elle peut être réalisée entre 50 et 200°C et de préférence entre 90 et 160°C. L'initiateur de radicaux libres peut être choisi parmi les peroxydes et hydroperoxydes organiques comme le peroxyde de dibenzoyle, le peroxybenzoate de tert-butyle, le 1,1-bis-(tertbutylperoxy)cyclohexane. L'initiateur de radicaux libres peut être présent dans le milieu de polymérisation à raison de 50 à 2000 ppm sur la base du ou des monomères vinylaromatiques.

Par monomère vinylaromatique, on entend le styrène, le styrène substitué sur le groupement vinyl par un groupement alkyl tel que l'alpha-méthylstyrène ou l'alpha-éthylstyrène, le styrène substitué sur le cycle par un groupement alkyl tel que l'ortho-vinyltoluène, le para-vinyltoluène, l'ortho-éthylstyrène, le 2-4-diméthylstyrène, le styrène substitué sur le cycle par un halogène comme par exemple le 2,4-dichlorostyrène, le styrène substitué à la fois par un halogène et un groupement alkyl tel que le 2-chloro-4-méthylstyrène, ainsi que le vinylanthracène. Le styrène est un monomère vinylaromatique préféré.

Le milieu de polymérisation peut de plus contenir au moins un monomère copolymérisable avec le (ou les) monomère vinylaromatique, comme par exemple au moins un monomère acrylique ou méthacrylique.

Par caoutchouc, on entend ceux habituellement utilisés pour améliorer les propriétés chocs des polymères vinylaromatiques. Ce sont habituellement des polydiènes conjugués tels que le polybutadiène, le polyisoprène, les copolymères styrène-butadiène de type élastomère également appelés caoutchouc "SBR" ("styrène-butadiène rubber").

Le milieu de polymérisation peut également contenir au moins un solvant organique. Celui-ci est choisi de telle sorte qu'il ne bout pas dans les conditions de polymérisation et de telle sorte qu'il soit miscible avec le monomère vinylaromatique et le polymère vinylaromatique qui en dérive. On peut utiliser les hydrocarbures alicycliques tel que le cyclohexane ou de manière préférée, les aromatiques tels que le toluène, le benzène, l'éthylbenzène ou le xylène.

En générale, la quantité de solvant utilisée est telle que le milieu de polymérisation contient de 0 à 30 % en poids de solvant organique.

On peut ajouter au milieu de polymérisation, avant ou au cours de la polymérisation, au moins un adjuvant ou initiateur de polymérisation, habituels à ce genre de préparation. Ces adjuvants peuvent être des plastifiants comme des huiles minérales, le stéarate de butyle ou le phtalate de dioctyle, des stabilisants comme des antioxydants pouvant être le phénol substitué par un groupement alkyl tel que le ditertiobutylparacrésol ou les phosphites tel que le trinonylphénylphosphite.

Au cours de la polymérisation se produit le phénomène bien connu d'inversion de phase conduisant à la formation de particules de caoutchouc dispersées dans une matrice de polymère ou copolymère vinylaromatique. Pendant cette polymérisation, l'agitation doit être suffisante pour que la dispersion des particules de caoutchouc soit uniforme. Il semble que la présence de l'agent de couplage se traduise par un plus fort entraînement de la charge minérale à l'intérieur des nodules de caoutchouc.

Après polymérisation, il convient de procéder à l'élimination des espèces volatiles comme les monomères n'ayant pas réagit et l'éventuel solvant organique. Ceci peut être réalisé par des techniques conventionnelles comme par l'usage d'un dévolatilisateur fonctionnant à chaud et sous vide.

La teneur finale de la composition selon l'invention en caoutchouc et en polymère ou copolymère vinylaromatique dépend du degré d'avancement de la polymérisation réalisée avant élimination des espèces volatiles. En effet, si le degré d'avancement de la polymérisation est faible, l'élimination des espèces volatiles produira l'élimination d'une forte quantité de monomère vinylaromatique et la teneur finale de la composition en caoutchouc sera plus élevée. De façon à ne pas produire une trop forte réticulation du caoutchouc, il est préférable de ne pas pousser la polymérisation à 100 % des monomères vinylaromatiques.

L'avancement de la polymérisation peut être suivi grâce à des prélèvements effectués au cours de l'étape de polymérisation et par détermination du taux de solide sur les échantillons prélevés. Par taux de solide on entend le pourcentage en poids de solide obtenu après évaporation sous un vide de 25 millibars pendant environ 20 minutes à 200°C des échantillons prélevés par rapport au poids initial de l'échantillon prélevé. On pourra pousser la polymérisation, par exemple jusqu'à l'obtention d'un taux de solide de 70 ou 80 % en poids.

Généralement, le milieu destiné à être polymérisé contient :

- ♦ 40 à 10 parties en poids de monomère vinylaromatique
- ♦ 0 à 10 parties en poids de solvant organique
- ♦ 2 à 20 parties en poids de caoutchouc
- ♦ 2 à 40 parties en poids de charge minérale
- ♦ 0,2 à 2 % en poids d'agent de couplage par rapport à la masse de la charge minérale

$$\text{(pourcentage d'agent de couplage} = \frac{\text{masse d'agent de couplage}}{\text{masse de charge minérale}} \cdot 100\text{)}$$

, le rapport de la masse de monomère vinylaromatique sur la masse de caoutchouc restant généralement supérieure à 2, voire 5.

De préférence, on mélange ces différents constituants de façon à ce que le caoutchouc soit le dernier constituant à entrer en contact avec les autres.

Dans les exemples qui suivent, la structure et les propriétés des compositions obtenus ont été déterminées par les techniques suivantes :

- ♦ résistance au choc IZOD entaillé : norme 180/1A
- ♦ allongement à la rupture en traction : norme ISO R 527
- ♦ masse moléculaire du polystyrène : le polystyrène est extrait du polystyrène choc par la méthyléthylcétone et sa masse moléculaire est mesurée par chromatographie par perméation de gel (GPC). Dans le tableau 1, Mw représente la masse moléculaire moyenne en poids du polystyrène, Mn représente la masse moléculaire moyenne en nombre du polystyrène et Mw/Mn représente le rapport de la masse moléculaire moyenne en poids sur la masse moléculaire moyenne en nombre du polystyrène.
- ♦ taux de polybutadiène dans les compositions : norme NF T 51-007
- ♦ taux de charge minérale dans les compositions :
  calcul à partir de la masse de charge minérale introduite, compte tenu de ce que la totalité de la charge minérale se retrouve dans la composition finale.
- ♦ taux d'agent de couplage : calcul à partir de la masse d'agent de couplage introduite, compte tenu de ce que la totalité de l'agent de couplage est greffée sur la charge minérale.

On donne ci-après la signification des abbréviations utilisées dans les exemples :

- - $d_{50}$ : diamètre moyen des particules de charge minérale, c'est-à-dire diamètre en dessous duquel se trouvent 50 % en poids des particules.
- - $d_{90}$ : diamètre en dessous duquel se trouvent 90 % en poids des particules.

Les exemples décrivent l'utilisation de deux agents de couplage, d'une part un polybutadiène présentant une fonction anhydride d'acide carboxylique, et d'autre part l'acide stéarique. Ces deux agents de couplage satisfont chacun aux trois conditions de compatibilité précédemment décrites.

### *Exemple 1*

Dans un réacteur de 16 litres équipé d'un agitateur à double hélice et d'une régulation de température, on introduit 5250 g de styrène, 420 g d'éthylbenzène, 210 g d'huile plastifiante de marque Primol 352 commercialisé par la Société ESSO, 665 g de carbonate de calcium dont le $d_{50}$ est de 2 $\mu$m et le $d_{90}$ est de 10 $\mu$m, 5 g de polybutadiène de marque Polyvest - C70 commercialisé par la Société HÜLS, et 420 g de polybutadiène de marque HX 527 commercialisé par la Société BAYER. Le polyvest-C70 est destiné à jouer le rôle d'agent de couplage. Il s'agit d'un polybutadiène de masse moléculaire moyenne en nombre de 2000 g/mole présentant une fonction anhydride. Il est représenté dans le tableau 1 par "PBu".

Le mélange est agité à température ambiante pendant 7 heures. Le réacteur est ensuite porté à 130°C et, au bout de 4 heures, le taux de solide étant d'environ 55 %, le contenu du réacteur est transféré dans un dévolatilisateur à environ 180°C sous vide, environ 10 minutes, de façon à extraire le styrène non polymérisé et l'éthylbenzène. Le produit obtenu est granulé de façon connue de l'homme du métier. Des éprouvettes sont élaborées par injection pour la réalisation des tests mécaniques. Le tableau 1 rassemble les propriétés du matériau obtenu.

## Exemple 2

On procède comme pour l'exemple 1 sauf que l'on introduit 4585 g de styrène au lieu des 5250 g de l'exemple 1, 1330 g de carbonate de calcium au lieu des 665 g de l'exemple 1, et 10 g du même agent de couplage au lieu des 5 g de l'exemple 1. Le tableau 1 rassemble les propriétés du matériau obtenu.

## Exemple 3 (comparatif)

On procède comme pour l'exemple 1, sauf que l'on n'introduit ni charge minérale ni agent de couplage, et que l'on introduit 5950 g de styrène au lieu des 5250 g de l'exemple 1. Le tableau 1 rassemble les propriétés du matériau obtenu.

## Exemple 4 (comparatif)

Dans un réacteur de 16 litres équipé d'un agitateur à double hélice et d'une régulation de température on introduit 6195 g de styrène, 420 g d'éthylbenzène, 105 g d'huile plastifiante de marque Primol 352 commercialisé par la Société ESSO, et 280 g de polybutadiène de marque HX 527 commercialisé par la Société BAYER.

Le mélange est agité à température ambiante pendant 7 heures. Le réacteur est ensuite porté à 130°C et au bout de 4 heures, le taux de solide étant d'environ 55 %, le contenu du réacteur est transféré dans un dévolatilisateur à environ 180°C sous vide, environ 10 minutes, de façon à extraire le styrène non polymérisé et l'éthylbenzène. Le produit obtenu est granulé de façon connue de l'homme du métier. Des éprouvettes sont élaborées par injection pour la réalisation des tests mécaniques. Le tableau 1 rassemble les propriétés du matériau obtenu.

## Exemple 5

On procède comme pour l'exemple 4, sauf que l'on introduit 5845 g de styrène au lieu de 6195 g de l'exemple 1, et de plus, avant l'introduction de l'huile plastifiante, on introduit 348,25 g de carbonate de calcium identique à celui de l'exemple 1, puis 1,75 g d'agent de couplage identique à celui de l'exemple 1. Le tableau 1 rassemble les propriétés du matériau obtenu.

## Exemple 6

On procède comme pour l'exemple 5, sauf que l'on introduit 5495 g de styrène au lieu des 5845 g de l'exemple 5, 696,5 g de carbonate de calcium au lieu des 348,25 de l'exemple 5, et 3,5 g d'agent de couplage au lieu des 1,75 g de l'exemple 5. Le tableau 1 rassemble les propriétés du matériau obtenu.

## Exemple 7

On procède comme pour l'exemple 5, sauf que l'on introduit 5145 g de styrène au lieu des 5845 g de l'exemple 5, 1044,75 g de carbonate de calcium au lieu des 348,25 de l'exemple 5, et 5,25 g d'agent de couplage au lieu des 1,75 g de l'exemple 5. Le tableau 1 rassemble les propriétés du matériau obtenu.

## Exemple 8 (comparatif)

On procède comme pour l'exemple 5, sauf que l'on introduit 350 g de carbonate de calcium au lieu des 348,25 de l'exemple 5, et sauf que l'on n'introduit pas d'agent de couplage. Le tableau 1 rassemble les propriétés du matériau obtenu.

## Exemple 9 (comparatif)

On fabrique un polystyrène choc comme dans l'exemple 4. Au polystyrène choc ainsi obtenu, on mélange le même carbonate de calcium que pour les exemples précédents par malaxage à 190°C dans un mélangeur à double vis pendant 30 minutes. Le tableau 1 rassemble les propriétés du matériau obtenu.

### *Exemple 10 (comparatif)*

On procède comme pour l'exemple 9 sauf que le carbonate de calcium a été préalablement traité par de l'acide stéarique (représenté par AcSt dans le tableau 1). Avant mélange avec le polystyrène, le carbonate de calcium contenait 1 % en poids d'acide stéarique.

La poudre de carbonate de calcium ainsi traitée est disponible sous la marque hydrocarb 99T. Cette poudre présente les mêmes caractéristiques granulométriques que la poudre des exemples précédents. Le tableau 1 rassemble les résultats.

### *Exemple 11*

On procède comme pour l'exemple 5 sauf que l'on introduit 5730,4 g de styrène au lieu des 5845 g de l'exemple 5, 460 g de carbonate de calcium au lieu des 348,25 g de l'exemple 5, et 4,6 g d'acide stéarique au lieu de 1,75 g de l'agent de couplage de l'exemple 5. Le tableau 1 rassemble les propriétés du matériau obtenu.

## Tableau 1

| | Unité | \[1\] | \[2\] | \[3\] Comparatif | \[4\] Comparatif | \[5\] | \[6\] | \[7\] | \[8\] Comparatif | \[9\] Comparatif | \[10\] Comparatif | \[11\] |
|---|---|---|---|---|---|---|---|---|---|---|---|---|
| **COMPO-SITION** Caoutchouc | % poids | 8,37 | 7,91 | 8,37 | 6,37 | 5,64 | 6,02 | 5,61 | 5,8 | 6 | 6 | 5,9 |
| Charge | % poids | 14 | 26,5 | 0 | 0 | 7 | 15 | 21 | 7,2 | 10 | 10 | 10 |
| Nature de l'agent de couplage | - | PBu | PBu | - | - | PBu | PBu | PBu | - | - | AcSt | AcSt |
| Quantité en agent de couplage | % poids | 0,07 | 0,132 | - | - | 0,035 | 0,07 | 0,1 | - | - | 0,1 | 0,1 |
| **PROPRIETES** Mw | - | - | - | - | - | 235 000 | 235 000 | 236 000 | 235 000 | 236 000 | - | - |
| Mn | - | - | - | - | - | 85 000 | 82 000 | 85 000 | 81 000 | 84 000 | - | - |
| Résistance aux chocs IZOD | KJ/m² | 12,4 | 10,7 | 12,8 | 7,6 | 7,2 | 7,1 | 4,7 | 6,3 | 4,5 | 4,8 | 7 |
| Allongement à la rupture | % | 20,7 | 11,3 | 17,8 | 26,5 | 22,1 | 20,5 | 15,2 | 17,1 | 9,5 | 12 | 24 |

Exemples n°

**Revendications**

1. Procédé de fabrication d'une composition de la famille des polymères vinylaromatiques chocs, comprenant un polymère vinylaromatique, un caoutchouc sous la forme de particules et une charge minérale présentant un diamètre moyen allant de 0,2 à 20 µm, ledit procédé comprenant une étape de polymérisation d'au moins un monomère vinylaromatique en présence de ladite charge minérale, caractérisé en ce que l'étape de polymérisation est réalisée en présence d'un agent de couplage capable de greffer en surface de la charge minérale un groupement organique.

2. Procédé selon la revendication 1 caractérisé en ce que la composition est telle que le rapport de la masse de polymère issu de la polymérisation ou copolymérisation du monomère vinylaromatique sur la masse de caoutchouc va de 2 à 40.

3. Procédé selon la revendication 1 ou 2, caractérisé en ce que l'agent de couplage :

   ♦ est soluble à 20°C dans le monomère vinylaromatique à raison d'au moins 100 g par litre, et
   ♦ forme, en mélange à parts égales en poids avec le caoutchouc, une phase homogène à toute température comprise entre 20 et 250°C, et
   ♦ permet à la charge minérale de flotter au moins une minute à la surface de l'eau à 20°C, ladite charge minérale ayant préalablement été recouverte par l'agent de couplage.

4. Procédé selon l'une des revendications 1 à 3 caractérisé en ce que le groupement organique comprend un enchainement linéaire d'au moins quatre atomes de carbone ledit enchainement comprenant au plus une insaturation.

5. Procédé selon la revendication 4 caractérisé en ce que le groupement organique comprend au moins une chaîne de polybutadiène.

6. Procédé selon l'une des revendications 1 à 5 caractérisé en ce que l'agent de couplage ne contient ni noyau aromatique, ni atome d'halogène.

7. Procédé selon l'une des revendications 1 à 6 caractérisé en ce que l'agent de couplage présente une fonction acide carboxylique ou anhydride d'acide carboxylique.

8. Procédé selon l'une des revendications 1 à 3 caractérisé en ce que l'agent de couplage est l'acide stéarique.

9. Procédé selon l'une des revendications 1 à 8 caractérisé en ce que la charge minérale est le carbonate de calcium.

10. Procédé selon l'une des revendications 1 à 9 caractérisé en ce que le caoutchouc est un polybutadiène.

11. Procédé selon l'une des revendications 1 à 10 caractérisé en ce que au moins un monomère vinylaromatique est le styrène.

12. Procédé selon l'une des revendications 1 à 11 caractérisé en ce que le milieu de polymérisation contient un solvant organique.

13. Procédé selon la revendication 12 caractérisé en ce que le solvant organique est l'éthylbenzène.

14. Procédé selon l'une des revendications 1 à 13 caractérisé en ce que le milieu de polymérisation contient :

   - 40 à 10 parties en poids de monomère vinylaromatique,
   - 0 à 10 parties en poids de solvant organique,
   - 2 à 20 parties en poids de caoutchouc,
   - 2 à 40 parties en poids de charge minérale,
   - 0,2 à 2 % en poids d'agent de couplage par rapport à la charge minérale

15. Procédé selon la revendication 14 caractérisé en ce que le rapport de la masse de monomère vinylaromatique sur la masse de caoutchouc est supérieure à 2.

16. Procédé selon la revendication 15 caractérisé en ce que le rapport de la masse de monomère vinylaromatique sur la masse de caoutchouc est supérieure à 5.

**17.** Composition susceptible d'être obtenue par le procédé de l'une des revendications 1 à 16.

Office européen
des brevets

**RAPPORT DE RECHERCHE EUROPEENNE**

Numero de la demande

EP 95 11 8202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-3 536 785 (B. C. WILBUR)<br><br>* exemple 6; tableau III * | 1,3,4,6, 8,10-12, 17 | C08F279/02<br>C08F291/02<br>C08L51/04<br>C08F292/00 |
| A | CHEMICAL ABSTRACTS, vol. 101, no. 26, 24 Décembre 1984 Columbus, Ohio, US; abstract no. 231503m, MATSUSHITA ELECTRIC INDUSTRIAL CO.: "thermosetting molding compositions" page 33; colonne 2; XP002000824<br>* abrégé *<br>& JP-A-59 159 809 (...) | 1,5-7,9, 11,17 | |
| A | US-A-3 855 194 (CONARD)<br>* exemple 2 * | 1,6,17 | |

|  | DOMAINES TECHNIQUES RECHERCHES (Int.Cl.6) |
|---|---|
|  | C08F<br>C08L |

Le présent rapport a été établi pour toutes les revendications

| Lieu de la recherche | Date d'achèvement de la recherche | Examinateur |
|---|---|---|
| LA HAYE | 18 Avril 1996 | Loiselet-Taisne, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P04C02)